# FASCICULE DE BREVET EUROPEEN

(11) **EP 3 850 940 B1**
(45) Date de publication et mention de la délivrance du brevet: **14.12.2022**
(21) Numéro de dépôt: 21150670.4
(22) Date de dépôt: 08.01.2021
(51) Int. Cl.: A01G 3/037

(54) **SÉCATEUR À TENUE ERGONOMIQUE**
GARTENSCHERE MIT ERGONOMISCHEM GRIFF
SECATEUR WITH ERGONOMIC HOLDING

(30) Priorité: 15.01.2020 FR 2000346
(43) Date de publication de la demande: 21.07.2021
(73) Titulaire: Innovation Fabrication Commercialisation Infaco, 81140 Cahuzac-sur-Vère (FR)
(72) Inventeur: KATCHINSKY, Ludwig, 31450 Montgiscard (FR); GOUT, Christophe, 81150 Castelnau-De-Lévis (FR); PRADEILLES, David, 81600 Montans (FR)
(74) Mandataire: IPAZ

(56) Documents cités:
- EP-A1- 3 225 100
- FR-A1- 2 770 372
- JP-U- S59 193 366
- KR-A- 20140 085 891
- US-A- 1 232 291
- US-B1- 8 793 883

## Description

La présente invention concerne un sécateur électrique, dont la tenue est ergonomique pour un opérateur.

Le domaine de l'invention est le domaine des sécateurs électriques.

### État de la technique

Les sécateurs électriques, tels que celui décrit dans le document EP 3 225 100 A1, sont utilisés pour réaliser la taille de plantes, et en particulier la taille de vignes.

Dans certains cas, un sécateur électrique peut être utilisé de manière continue pendant plusieurs dizaines de minutes, voire pendant plusieurs heures. Une telle utilisation prolongée du sécateur est même assez commune dans le domaine professionnel, par exemple pour la taille de la vigne.

Or, un sécateur électrique comporte un moteur électrique, un outil de coupe, un mécanisme d'entrainement, une carte électronique, et parfois une batterie intégrée. De ce fait, le poids d'un sécateur électrique devient non négligeable. Dans le cas d'une utilisation prolongée, cela peut provoquer une fatigue non négligeable, des risques d'accident, des douleurs, voire même des troubles musculo-squelettiques.

Les mêmes inconvénients peuvent exister pour un sécateur manuel, c'est-à-dire pour un sécateur qui n'est pas électrique, en fonction du poids du sécateur, de la durée d'utilisation et de la nature du travail.

Un but de la présente invention est de remédier à au moins un des inconvénients précités.

Un autre but de la présente invention est de proposer un sécateur plus facile et plus ergonomique à tenir.

Un autre but de la présente invention est de proposer un sécateur diminuant la fatigue, les douleurs, les risques d'accident et de troubles musculo-squelettiques lors de son utilisation, en particulier lors d'une utilisation plongée dudit sécateur.

### Exposé de l'invention

L'invention permet d'atteindre au moins l'un de ces buts par un sécateur tel que défini dans la revendication 1.

Le sécateur selon l'invention comprend donc un élément de retenue élastique qui applique un effort de maintien de la main de l'utilisateur tenant le sécateur contre le corps du sécateur. Par conséquent, l'élément de retenue participe à l'effort de tenue du sécateur dans la main de l'utilisateur de sorte que l'utilisateur a besoin d'appliquer un effort de serrage plus faible par sa main et ses doigts, sur le corps du sécateur, pour le tenir. Ainsi, le sécateur selon l'invention est plus facile et plus ergonomique à tenir dans la main d'un utilisateur. De plus, le sécateur selon l'invention permet de diminuer la fatigue, les douleurs, les risques d'accident et de troubles musculo-squelettiques lors de son utilisation, en particulier lors d'une utilisation plongée.

Le sécateur selon l'invention est électrique. En effet, comme expliqué plus haut, un sécateur électrique présente généralement un poids plus élevé qu'un sécateur classique. Dans ce cas, le sécateur électrique peut comprendre un moteur électrique et optionnellement une batterie intégrée au sécateur. Alternativement, la batterie peut ne pas être intégrée au sécateur et peut être déportée. Par exemple la batterie peut être portée par l'utilisateur et reliée au sécateur par un câble électrique.

Selon l'invention, l'élément de retenue est prévu pour venir en appui sur le dos de la main passée entre ledit élément de retenue et le corps dudit sécateur, et serrer ladite main contre ledit corps.

Un effort de serrage est appliqué contre le dos de la main et en direction du corps du sécateur pour maintenir la main contre le corps du sécateur. Cela permet de simplifier l'architecture de l'élément de retenue.

Préférentiellement, l'élément de retenue peut être tendu, ou en tension, en l'absence de la main. Ainsi, lorsque la main de l'utilisateur est passé entre ledit élément de retenue et le corps du sécateur, celle-ci se trouve de fait serrée entre le corps du sécateur et l'élément de retenue.

Avantageusement, l'élément de retenue peut être configuré pour appliquer un effort de retenue, et en particulier de serrage, suffisant pour retenir le sécateur contre la main lorsque ladite main n'applique aucun effort de serrage sur le sécateur, et en particulier sur le corps du sécateur.

Une telle configuration peut par exemple être définie en fonction de la tension, ou de la longueur, de l'élément de retenue et/ou du poids du sécateur et/ou de l'épaisseur de la main, et peut, par exemple, être identifiée par des essais tenant compte d'au moins un des paramètres cités.

Ainsi, l'utilisateur peut arrêter d'appliquer un effort de serrage sur le corps du sécateur pour reposer sa main et ses doigts, sans pour autant de risquer de laisser tomber le sécateur. Surtout, l'élément de retenue permet de retenir le sécateur avec la main pour éviter une chute intempestive du sécateur due à la fatigue de la main de l'utilisateur ou à un mouvement incontrôlé.

Alternativement, l'élément de retenue peut être configuré de sorte que le sécateur ne reste pas avec, ou dans, la main en l'absence d'un effort de serrage de la main sur le sécateur, et en particulier sur le corps du sécateur.

L'élément de retenue élastique permet de faciliter le passage de la main entre le corps du sécateur et ledit élément de retenue, en particulier sans avoir à démonter ledit élément de retenue.

De plus, l' élément de retenue élastique permet une plus grande flexibilité, notamment en ce qui concerne la taille de la main de l'utilisateur.

L'élément de retenue élastique peut être en tension en l'absence de la main de l'utilisateur de sorte que lorsque la main de l'utilisateur est passée entre le corps du sécateur et l'élément de retenue, elle se trouve de fait serrée contre le corps du sécateur par l'élément de retenue.

Préférentiellement, l'élément de retenue peut se présenter sous la forme d'une bande plate d'épaisseur négligeable par apport à sa largeur, et en particulier sous la forme d'une sangle, en particulier élastique.

Ainsi, l'effort de serrage est appliqué sur le dos de la main de l'utilisateur de manière plus ergonomique et sans agresser la main de l'utilisateur.

L'élément de retenue peut présenter une largeur plus élevée au niveau de sa portion venant au contact de la main de l'utilisateur.

Une telle portion plus large permet une meilleure retenue, tout en répartissant mieux l'effort de serrage sur le dos de la main de l'utilisateur. De plus, cette meilleure répartition de l'effort peut aussi diminuer l'effet de contention, qui pourrait avoir un effet indésirable sur une longue période d'utilisation.

Cette portion plus large peut se trouver au niveau d'une zone centrale de l'élément de retenue.

L'élément de retenue peut présenter un revêtement spécifique du côté de sa face venant au contact de la main de l'utilisateur.

Un tel revêtement peut présenter une plus grande adhérence comparée au reste de l'élément de retenue, pour permettre une meilleure retenue de la main.

Alternativement, ou en plus, un tel revêtement peut être plus doux comparé au reste de l'élément de retenu, pour permettre une meilleure ergonomie pour l'utilisateur.

En particulier, l'élément de retenue peut comporter une mousse adhérente du côté de sa face venant au contact de la main de l'utilisateur.

Préférentiellement, mais de manière nullement limitative, l'élément de retenue peut être disposée dans une direction longitudinale dudit sécateur.

Bien entendu, l'élément de retenue peut ne pas être aligné exactement avec la direction longitudinale et peut être légèrement incliné par rapport à cette direction longitudinale, par exemple d'un angle inférieur ou égale à 10°.

L'élément de retenue est fixé au sécateur.

En particulier l'élément de retenue peut être fixé au corps du sécateur, et/ou ou à l'outil de coupe, ou encore à un connecteur électrique faisant saillie du corps du sécateur.

L'élément de retenue peut être fixé au sécateur, en particulier au corps du sécateur ou à l'outil de coupe, par une fixation, dite distale, du côté de l'extrémité distale du corps dudit sécateur.

La fixation distale peut avantageusement être amovible de sorte que l'élément de retenue peut être détaché du sécateur du côté de ladite extrémité distale.

Une telle fixation distale peut comprendre tout moyen de fixation, telle que par exemple un scratch, un bouton pression, une fixation mâle/femelle, etc.

Selon un exemple de réalisation nullement limitatif, la fixation distale peut comprendre un élément mâle solidaire de l'élément de retenu, telle qu'une languette ou une clavette ou encore un crochet, venant en prise avec un élément femelle prévu sur le corps du sécateur, tel qu'un un rail ou une gorge ou encore un évidement.

Selon encore un autre exemple de réalisation nullement limitatif, la fixation distale peut comprendre, ou être réalisée par, une boucle prévue sur l'élément de retenue, ou formée par l'élément de retenue, et passée autour de l'outil de coupe, en particulier de la base dudit outil de coupe. Plus particulièrement, l'élément de retenue peut être passé autour de l'outil de coupe de sorte à former au moins une demi boucle autour de l'outil de coupe.

L'élément de retenue peut être fixé au sécateur, en particulier au corps du sécateur ou à un connecteur électrique dudit sécateur, par une fixation, dite proximale, du côté d'une extrémité, dite proximale, du corps, opposée à l'extrémité distale.

La fixation proximale peut avantageusement être amovible de sorte que l'élément de retenue peut détachée du sécateur du côté de ladite extrémité proximale.

Une telle fixation proximale peut comprendre tout moyen de fixation, telle que par exemple un scratch, un bouton pression, une fixation mâle/femelle, etc.

Selon un exemple de réalisation nullement limitatif, la fixation proximale peut comprendre un élément mâle solidaire de l'élément de retenue, telle qu'une languette ou une clavette ou encore un crochet, venant en prise avec un élément femelle prévu sur le corps du sécateur, tel qu'un un rail ou une gorge ou encore un évidement.

Selon encore un autre exemple de réalisation nullement limitatif, la fixation proximale peut comprendre, ou être réalisée par, une boucle, prévue sur l'élément de retenue ou formée par l'élément de retenu, et passée autour d'un connecteur électrique d'alimentation du sécateur au niveau de l'extrémité proximale. Plus particulièrement, l'élément de retenue peut être passé autour dudit connecteur électrique de sorte à former au moins une demi boucle autour dudit connecteur électrique.

Avantageusement, le sécateur selon l'invention peut comprendre au moins un enrouleur pour enrouler l'élément de retenue lorsqu'il n'est pas utilisé.

Ainsi, lorsqu'il n'est pas utilisé, l'élément de retenue peut être rangé dans/autour de l'enrouleur.

L'enrouleur peut être externe au corps du sécateur, ou intégré à l'intérieur du corps du sécateur.

L'enrouleur peut être motorisé ou non.

Préférentiellement, l'enrouleur peut être disposé au niveau de l'extrémité proximale du corps du sécateur et peut en plus servir de fixation proximale de l'élément de retenue.

Avantageusement, l'élément de retenue peut être repositionnable de sorte qu'il peut être positionné sélectivement d'un côté ou de l'autre du corps dudit sécateur.

Ainsi, l'élément de retenue peut être utilisé sélectivement d'un côté ou de l'autre du sécateur en fonction de la main qui tient le corps du sécateur. Plus précisément, l'élément de retenue peut ainsi être utilisé aussi bien pour un utilisateur droitier que pour un utilisateur gaucher.

Pour ce faire, l'élément de retenue peut comporter au moins une fixation amovible. Ainsi, il est possible de détacher l'une au moins des fixations de l'élément de retenue pour le positionner sélectivement d'un côté ou de l'autre du sécateur.

Alternativement, ou en plus, au moins une fixation de l'élément de retenue au sécateur peut être rotative permettant de tourner l'élément de retenue autour de la direction longitudinale du sécateur et le positionner, sélectivement, d'un côté ou de l'autre du sécateur.

Le sécateur selon l'invention peut comprendre un moyen d'ajustement de la tension, ou de la longueur, de l'élément de retenue.

Un tel moyen d'ajustement peut comprendre un ou plusieurs éléments de fixation, discrets ou continu(s), prévu(s) sur le sécateur, permettant de choisir sélectivement une position de fixation parmi plusieurs positions de fixation, chaque position de fixation modifiant la tension, ou la longueur, de l'élément de retenue.

Alternativement ou en plus, un tel moyen d'ajustement peut comprendre un ou plusieurs éléments de fixation, discrets ou continu(s), prévu(s) sur l'élément de retenue, permettant de choisir sélectivement une position de fixation parmi plusieurs positions de fixation, chaque position de fixation modifiant la tension, la longueur de l'élément de retenue.

Suivant encore une autre alternative, un tel moyen d'ajustement peut comprendre un enrouleur permettant de modifier la longueur utilisée de l'élément de retenue. Pour ce faire, la position de début d'enroulement et/ou la position de fin d'enroulement, de l'enrouleur peut être ajustée manuellement, avec ou sans utilisation d'un outil, par exemple en tournant un axe sur lequel est monté l'enrouleur.

Suivant encore une autre alternative, un tel moyen d'ajustement peut comprendre un élément de fixation de l'élément de retenue au sécateur, et dont la position sur l'élément de retenue est ajustable.

Suivant un mode de réalisation, le sécateur selon l'invention peut comprendre deux éléments de retenue, positionnés de part et d'autre du corps dudit sécateur.

L'un au moins, ou chacun, des éléments de retenue peut présenter une combinaison quelconque des caractéristiques qui viennent d'être décrites, et qui ne sont pas reprises ici par soucis de concision.

### Description des figures et modes de réalisation

D'autres avantages et caractéristiques apparaîtront à l'examen de la description détaillée d'un mode de réalisation nullement limitatif, et des dessins annexés sur lesquels :
- les FIGURES 1a et 1b sont des représentations schématiques d'un exemple non limitatif de sécateur électrique ;
- les FIGURES 2a-2c sont des représentations schématiques d'un exemple de réalisation non limitatif d'un sécateur selon l'invention ; et
- les FIGURES 3 à 6 sont des représentations schématiques d'autres exemples de réalisations non limitatifs d'un sécateur selon l'invention.

Il est bien entendu que les modes de réalisation qui seront décrits dans la suite ne sont nullement limitatifs.

Sur les FIGURES les éléments communs à plusieurs FIGURES conservent la même référence.

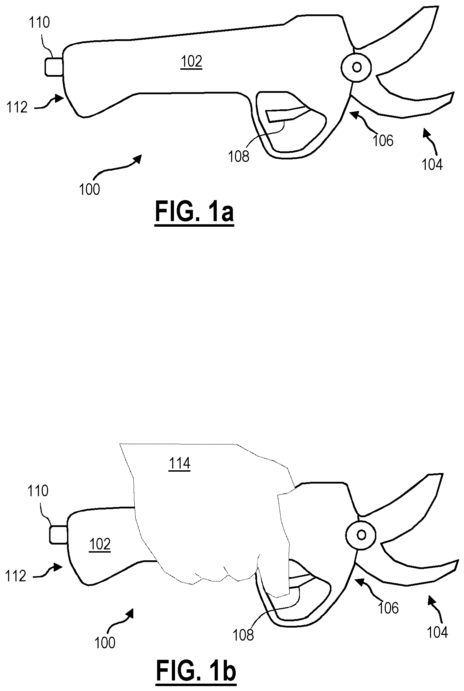

Les FIGURES 1a et 1b sont des représentations schématiques d'un exemple non limitatif de sécateur électrique.

Le sécateur électrique 100 est représenté seul sur la FIGURE 1a, et tenu dans la main d'un utilisateur sur la FIGURE 1b.

Le sécateur électrique 100 comprends un corps 102 qui est longitudinal. Le corps 102 comporte un châssis ou une coque délimitant un espace intérieur dans lequel se trouve généralement un moteur électrique, un mécanisme de transmission de mouvement, et éventuellement une carte électronique (non visibles).

Le sécateur 100 comprend un outil de coupe 104 positionné à une extrémité 106, dite distale, du corps 102 du sécateur 100. Dans l'exemple représenté, l'outil de coupe 104 comprend une lame mobile et une contre-lame fixe. Alternativement, l'outil de coupe 104 peut comprendre deux lames mobiles.

Le sécateur 100 comprend par ailleurs une gâchette 108 permettant de commander le moteur électrique du sécateur 100 et ainsi actionner l'outil de coupe 104.

Dans l'exemple représenté, le sécateur 100 comporte en outre un connecteur électrique 110, prévu à une extrémité 112, dite proximale, du corps 102 du sécateur, opposé à l'extrémité distale 106 dans la direction longitudinale du sécateur 100. Ce connecteur 110 permet d'alimenter le sécateur 100 en électricité depuis une source électrique externe, telle qu'une batterie déportée portée par l'utilisateur par exemple. Alternativement, le sécateur 100 peut comprendre une batterie intégrée, non amovible, rechargée par le connecteur 110. Suivant encore une autre alternative, le sécateur 100 peut comprendre une batterie amovible rechargée grâce à un chargeur externe. Dans ce cas, le sécateur peut ne pas comprendre de connecteur électrique 110.

Comme montré sur la FIGURE 1b, un utilisateur souhaitant utiliser le sécateur 100, le saisit par le corps 102, en prenant le corps 104 du sécateur 100 dans la paume de sa main 114. Dans cette position, la main 114 de l'utilisateur applique un effort de serrage pour maintenir le sécateur 100 dans sa main d'une part pour le porter et d'autre part pour éviter que celui-ci bouge lors d'une coupe ou d'une taille.

On comprend aisément que, cette tenue du sécateur 100 peut provoquer une fatigue non négligeable, des risques d'accident, des douleurs, voire même des troubles musculo-squelettiques, en particulier lors d'une utilisation prolongée.

La présente invention permet de remédier, au moins en partie, à au moins un de ces inconvénients.

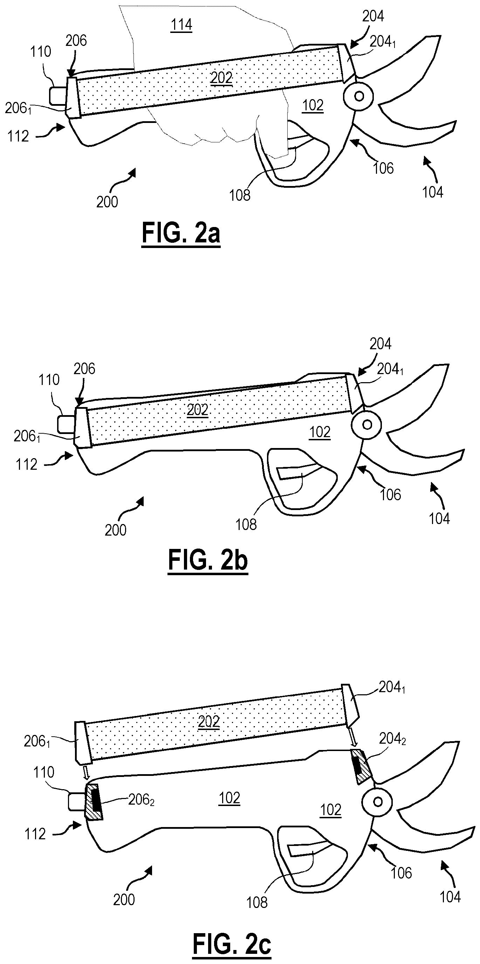

Les FIGURES 2a-2c sont des représentations schématiques d'un exemple de réalisation non limitatif d'un sécateur selon l'invention.

Le sécateur 200, représenté sur les FIGURES 2a-2c, comprend tous les éléments du sécateur 100 des FIGURES la et 1b.

De plus, le sécateur 200 comprend un élément de retenue 202 qui vient appliquer un appui sur le dos de la main 114 de l'utilisateur de sorte à serrer la main 114 de l'utilisateur contre le corps 102 du sécateur 200 et retenir le sécateur 200 avec la main 114. Pour ce faire, l'élément de retenue 202 est fixé au corps 102 du sécateur 200, et la main 114 est passée entre le corps 102 du sécateur 200 et l'élément de retenue 202. L'espace prévu entre l'élément de retenue 202 et le corps 102 du sécateur 200 est plus petit que l'épaisseur de la main 114 de sorte que, la main 114 se trouve serrée entre l'élément de retenue 202 et le corps 102 du sécateur 200.

La FIGURE 2a est une représentation du sécateur 200 avec la main 114 de l'utilisateur, la FIGURE 2b est une représentation du sécateur 200 sans la main 114 et la FIGURE 2c est une représentation du sécateur 200 sans la main 114 avec l'élément de retenue 202 séparé du sécateur 200.

L'élément de retenue 202 est fixé au sécateur 200, et en particulier au corps 102 du sécateur 200, par une fixation 204, dite distale, amovible, se trouvant du côté de l'extrémité distale 106. Dans l'exemple représenté, la fixation distale comprend une languette 204₁ (visible sur les FIGURES 2a-2c) fixée à l'élément de retenue 202, qui vient se loger dans un rail 204₂ (visible sur la FIGURE 2c), ou plus généralement une ouverture de retenue, aménagée dans ou sur le corps 102 du sécateur 200, par un mouvement de translation du haut vers le bas, comme montré par la flèche sur la FIGURE 2c.

L'élément de retenue 202 est fixé au sécateur 200, et en particulier au corps 102 du sécateur 200, par une fixation 206, dite proximale, amovible, se trouvant du côté de l'extrémité proximale 112. Dans l'exemple représenté, la fixation proximale 206 comprend une languette 206₁ (visible sur les FIGURES 2a-2c) fixée à l'élément de retenue 202, et qui vient se loger dans un rail 206₂ (visible sur la FIGURE 2c), ou plus généralement une ouverture de retenue, aménagée dans ou sur le corps 102 du sécateur 200 par un mouvement de translation du haut vers le bas, comme montré par la flèche sur la FIGURE 2c.

Dans le sécateur 200, les fixations distale 204 et proximale 206 sont amovibles. Alternativement, seule l'une, ou aucune, de ces fixations peut être amovible.

De plus, l'élément de retenue 202 est fixé à la languette 204₁ de manière ajustable de sorte que languette 204₁ peut être déplacée le long de l'élément de retenu. Alternativement, ou en plus, l'élément de retenue 202 est fixé à la languette 206₁ de manière ajustable de sorte que languette 206₁ peut être déplacée le long de l'élément de retenue 202. Cela permet d'ajuster la longueur, ou la tension, de l'élément de retenue 202 entre les fixations distale 204 et proximale 206, et ainsi d'ajuster l'effort d'appui exercée par l'élément de retenue 202 sur le dos de la main 114.

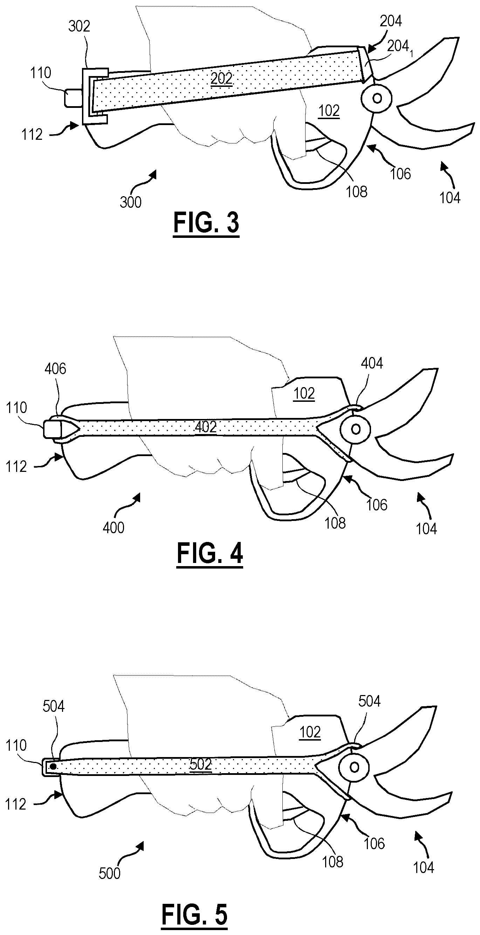

La FIGURE 3 est une représentation schématique d'un autre exemple de réalisation non limitatif d'un sécateur selon l'invention.

Le sécateur 300, représenté sur les FIGURE3, comprend tous les éléments du sécateur 200 des FIGURES 2a-2c, sauf en ce qui concerne les différences décrites ci-dessous.

À la place de la fixation proximale 206, le sécateur 300 de la FIGURE 3 comprend un enrouleur 302 dans lequel l'élément de retenue 202 peut s'enrouler, lorsqu'il n'est pas utilisé. Pour ce faire, la languette 204₁ est détachée du rail 204₂ et l'élément de retenue 202 est enroulé dans l'enrouleur 302.

L'enrouleur 302 peut être manuel ou motorisé. Alternativement, l'enrouleur 302 peut comprend un élément élastique, tel qu'un ressort, permettant d'enrouler l'élément de retenue 202, de manière automatique, lorsqu'il n'est pas retenu par la fixation distale 204.

L'enrouleur 302 est fixé au corps 102 de manière amovible ou non. Par exemple, l'enrouleur 302 peut être fixé au corps 102 du sécateur 300 de manière identique ou similaire à la fixation proximale 206 du sécateur 200.

L'enrouleur 302 peut être ajustable en ce qui concerne la position de début d'enroulement, c'est-à-dire la position à partir de laquelle il n'est plus possible dérouler l'élément de retenue 202. Pour ce faire, l'axe autour duquel est enroulé l'élément de retenue 202 dans l'enrouleur 302 peut être ajusté en rotation puis bloquée, par exemple par vissage ou dévissage. Ainsi, il est possible d'ajuster la longueur ou la tension de l'élément de retenue 202 entre l'enrouleur 302 et la fixation distale 204.

Dans les sécateurs 200 et 300, de manière nullement limitative, l'élément de retenue 202 est disposé dans la direction longitudinale du corps 102 du sécateur, avec une légère inclinaison vers le dessus du sécateur en allant de l'extrémité proximale 112 vers l'extrémité distale 106. Bien entendu l'élément de retenue 202 peut présenter une autre orientation que celle représentée, tout en restant sensiblement dans la direction longitudinale. Il peut par exemple être alignée avec la direction longitudinale ou présenter une inclinaison vers le bas.

La FIGURE 4 est une représentation schématique d'un autre exemple de réalisation non limitatif d'un sécateur selon l'invention.

Le sécateur 400, représenté sur les FIGURE 4, comprend tous les éléments du sécateur 100 des FIGURES la et 1b.

De plus, le sécateur 400 comprend un élément de retenue 402 qui vient appliquer un appui sur le dos de la main 114 de l'utilisateur de sorte à serrer la main 114 de l'utilisateur contre le corps 102 du sécateur 400 Pour ce faire, l'élément de retenue 402 est fixé au sécateur 400 et la main 114 est passée entre le corps 102 du sécateur 400 et l'élément de retenue 402. L'espace prévu entre l'élément de retenue 402 et le corps 102 du sécateur 400 est plus petit que l'épaisseur de la main 114 de sorte que, la main 114 se trouve serrée entre l'élément de retenue 402 et le corps 102 du sécateur 400.

Dans l'exemple représenté en FIGURE 4, au niveau de l'extrémité distale 106 du corps 102 du sécateur 400, l'élément de retenue 402 est fixé au sécateur 400, et en particulier à la base de l'outil de coupe 104 du sécateur 400, par une boucle 504, prévue à l'extrémité de l'élément de retenue 402, et passée autour de l'outil de coupe 104.

De manière similaire, au niveau de l'extrémité proximale 112 du corps 102 du sécateur 400, l'élément de retenue 402 est fixé au sécateur 400, et en particulier au connecteur électrique 110, par une boucle 406, prévue à l'extrémité de l'élément de retenue 402, et passée autour du connecteur électrique 110.

Ainsi, la fixation de l'élément de retenue 402 au sécateur 400 est réalisée de manière très simple et sans utiliser de composants additionnels.

Cet exemple de réalisation permet d'équiper un sécateur existant avec un élément de retenue, sans avoir à modifier ledit sécateur.

De plus, dans cet exemple de réalisation, l'élément de retenue 402 peut être positionné sélectivement d'un côté ou de l'autre du corps 102 dudit sécateur 400.

La FIGURE 5 est une représentation schématique d'un autre exemple de réalisation non limitatif d'un sécateur selon l'invention.

Le sécateur 500, représenté sur les FIGURE 5, comprend tous les éléments du sécateur 100 des FIGURES la et 1b.

De plus, le sécateur 500 comprend un élément de retenue 502 ayant la même fonction que les éléments de retenue décrits plus haut.

Dans l'exemple représenté en FIGURE 5, au niveau de l'extrémité distale 106 du corps 102 du sécateur 500, l'élément de retenue 502 est fixé au sécateur 500, et en particulier à la base de l'outil de coupe 104 du sécateur 500, par une boucle 504, prévue à l'extrémité de l'élément de retenue 502, et passée autour de l'outil de coupe 104, à l'instar de l'élément de retenue 402 du sécateur 400.

Au niveau de l'extrémité proximale 112, l'élément de retenue 502 est fixé au sécateur 500, et en particulier au connecteur électrique 110, par une vis ou un rivet ou encore un crochet, venant en prise avec le connecteur électrique 110. Cette fixation peut être amovible ou non.

Ce mode de réalisation permet d'équiper un sécateur existant avec un élément de retenue, sans avoir à modifier ledit sécateur.

Dans les sécateurs 400 et 500, de manière nullement limitative, l'élément de retenue 402 et 502 est disposé dans la direction longitudinale du corps 102 du sécateur. Bien entendu l'élément de retenue peut présenter une autre orientation que celle représentée, tout en restant sensiblement dans la direction longitudinale. Il peut par exemple être légèrement inclinée vers le haut ou vers le bas dans le sens allant de l'extrémité proximale 112 vers l'extrémité distale 106.

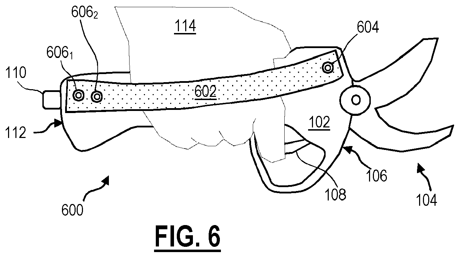

La FIGURE 6 est une représentation schématique d'un autre exemple de réalisation non limitatif d'un sécateur selon l'invention.

Le sécateur 600, représenté sur les FIGURE 6, comprend tous les éléments du sécateur 100 des FIGURES la et 1b.

De plus, le sécateur 600 comprend un élément de retenue 602 ayant la même fonction que les éléments de retenue décrits plus haut.

Dans l'exemple représenté en FIGURE 6, au niveau de l'extrémité distale 106 du corps 102 du sécateur 600, l'élément de retenue 602 est fixé au sécateur 600, et en particulier au corps 102 du sécateur 600, par une fixation amovible telle qu'un bouton-pression 604.

Au niveau de l'extrémité proximale 112 du corps 102 du sécateur 600, l'élément de retenue 602 comporte plusieurs, en particulier deux, bouton-pression 606₁-606₂, distribués dans le sens longitudinal de l'élément de retenue 602. Chaque bouton-pression 606₁-606₂ peut être utilisé pour fixer l'élément de retenue 602 au corps 102 du sécateur 600 du côté de l'extrémité proximale 112. Ainsi, il est possible d'ajuster la longueur, ou la tension, de l'élément de retenue 602, et ainsi d'ajuster l'effort d'appui exercée par l'élément de retenue 602 sur le dos de la main 114.

Bien entendu, alternativement ou en plus, il peut être prévu plusieurs boutons-pression sur le corps 102 du sécateur.

De plus, les boutons-pression peuvent être remplacés par tout autre moyen de fixation connu.

Dans les exemples décrits, l'élément de retenue se présente sous la forme d'une bande, et en particulier d'une sangle, de largeur constante. Bien entendu, l'élément de retenue peut présenter une autre forme que celle représentée. Il peut présenter une largeur variable, par exemple une largeur plus grande, en particulier dans sa portion centrale pour venir en appui sur une plus grande surface du dos de la main 114.

Dans les exemples décrits, l'élément de retenue est élastique. Cela permet une plus grande ergonomie et facilité d'utilisation.

De plus, dans tous les exemples décrits, l'élément de retenue peut comporter sur sa face venant au contact de la main un revêtement, ou un matériau, qui présente une plus grande adhérence comparée au reste de l'élément de retenue, de sorte à mieux retenir la main de l'utilisateur. Cette face peut en plus, ou alternativement, comporter un revêtement plus doux pour ne pas agresser la main de l'utilisateur.

En outre, les exemples de réalisation qui viennent d'être décrits, ainsi que leurs alternatives, peuvent être combinés entre eux. En particulier, une fixation distale utilisée dans un exemple de réalisation peut être combinée à une fixation proximale d'un autre exemple de réalisation.

Par ailleurs, dans les exemples décrits, le sécateur est équipé d'un seul élément de retenu. Selon des modes de réalisation non représentés, le sécateur selon l'invention peut comprendre au moins deux éléments de retenue disposées du même côté, ou de part et d'autre, du sécateur.

Bien entendu, l'invention n'est pas limitée aux exemples détaillés cidessus.

## Revendications

1. Sécateur électrique (200;300;400;500;600) comprenant :
- un corps longitudinal (102), et
- un outil de coupe (104) à une extrémité (106), dite distale, dudit corps (102) ;
**caractérisé en ce qu'**il comprend en outre au moins un élément de retenue (202;402;502;602) d'une main (114) d'un utilisateur tenant le sécateur (200;300;400;500;600), l'élément de retenue étant fixé au sécateur et prévu pour venir en appui sur le dos de ladite main (114) passée entre ledit élément de retenue (202;402;502;602) et le corps (102) dudit sécateur, et serrer ladite main (114) contre ledit corps (102) et maintenir ladite main (114) contre ledit corps (102) ;
ledit élément de retenue étant élastique (202;402;502;602).

2. Sécateur (200;300;400;500;600) selon la revendication précédente, **caractérisé en ce que** l'élément de retenue (202;402;502;602) est configuré pour appliquer un effort de retenue suffisant pour retenir le sécateur (200;300;400;500;600) contre la main (114) lorsque ladite main (114) n'applique aucun effort de serrage sur le sécateur (200;300;400;500;600).

3. Sécateur (200;300;400;500;600) selon l'une quelconque des revendications précédentes, **caractérisé en ce que** l'élément de retenue (202;402;502;602) se présente sous la forme d'une sangle.

4. Sécateur (200;300;400;500;600) selon l'une quelconque des revendications précédentes, **caractérisé en ce que** l'élément de retenue (202;402;502;602) est disposé dans une direction longitudinale dudit sécateur (200;300;400;500;600).

5. Sécateur (200;300;400;500;600) selon l'une quelconque des revendications précédentes, **caractérisé en ce que** l'élément de retenue (202;402;502;602) est fixé au sécateur par une fixation (204;404;504;604), dite distale, en particulier amovible, du côté de l'extrémité distale (106) du corps (102) dudit sécateur (200;300;400;500;600).

6. Sécateur (400;500) selon la revendication précédente, **caractérisé en ce que** la fixation distale comprend, ou est réalisée par, une boucle (404;504) prévue sur l'élément de retenue (402;502), ou formée par l'élément de retenue (402;502), et passée autour de l'outil de coupe (104), en particulier de la base dudit outil de coupe (104).

7. Sécateur (200;300;400;500;600) selon l'une quelconque des revendications précédentes, **caractérisé en ce que** l'élément de retenue (202;402;502;602) est fixé au sécateur (200;300;400;500;600) par une fixation (206:406:506:606₁,606₂), dite proximale, en particulier amovible, du côté d'une extrémité (112), dite proximale, du corps (102), opposée à l'extrémité distale (106).

8. Sécateur (400) selon la revendication précédente, **caractérisé en ce que** la fixation proximale comprend, ou est réalisée par, une boucle (406), prévue sur l'élément de retenue (402) ou formée par l'élément de retenu (402), et passée autour d'un connecteur électrique (110) d'alimentation dudit sécateur (400) au niveau de l'extrémité proximale (112).

9. Sécateur (300) selon l'une quelconque des revendications précédentes, **caractérisé en ce qu'**il comprend au moins un enrouleur (302) pour enrouler l'élément de retenue (202) lorsqu'il n'est pas utilisé.

10. Sécateur (400) selon l'une quelconque des revendications précédentes, **caractérisé en ce que** l'élément de retenue (402) est repositionnable de sorte qu'il peut être positionné sélectivement d'un côté ou de l'autre du corps (102) dudit sécateur (400).

11. Sécateur (200;300;600) selon l'une quelconque des revendications précédentes, **caractérisé en ce qu'**il comprend un moyen d'ajustement de la tension, ou de la longueur, de l'élément de retenue (202;602).

12. Sécateur selon l'une quelconque des revendications précédentes, **caractérisé en ce qu'**il comprend deux éléments de retenue, positionnés de part et d'autre du corps dudit sécateur.

## Patentansprüche

1. Elektrische Gartenschere (200;300;400;500;600) umfassend:
- einen Längskörper (102), und
- ein Schneidwerkzeug (104) an einem distalen Ende (106) des Körpers (102);
**dadurch gekennzeichnet, dass sie** ferner mindestens ein Halteelement (202;402;502;602) für eine Hand (114) eines Benutzers umfasst, der die Gartenschere (200;300;400;500;600) hält, wobei das Halteelement an der Gartenschere befestigt und vorgesehen ist, um auf dem Rücken der Hand (114), die zwischen dem Halteelement (202;402;502;602) und dem Körper (102) der Gartenschere hindurchgeführt wird, zur Auflage zu kommen und die Hand (114) an den Körper (102) zu drücken und die Hand (114) an dem Körper (102) zu halten;
wobei das Halteelement elastisch (202;402;502;602) ist.

2. Gartenschere (200;300;400;500;600) nach dem vorstehenden Anspruch, **dadurch gekennzeichnet, dass** das Halteelement (202;402;502;602) konfiguriert ist, um eine Haltekraft aufzubringen, die ausreicht, um die Gartenschere (200;300;400;500;600) zur Hand (114) hin zu halten, wenn die Hand (114) keine Druckkraft auf die Gartenschere (200;300;400;500;600) ausübt.

3. Gartenschere (200;300;400;500;600) nach einem der vorstehenden Ansprüche, **dadurch gekennzeichnet, dass** das Halteelement (202;402;502;602) in Form einer Halteschlaufe ausgebildet ist.

4. Gartenschere (200;300;400;500;600) nach einem der vorstehenden Ansprüche, **dadurch gekennzeichnet, dass** das Halteelement (202;402;502;602) in einer Längsrichtung der Gartenschere (200;300;400;500;600) angeordnet ist.

5. Gartenschere (200;300;400;500;600) nach einem der vorstehenden Ansprüche, **dadurch gekennzeichnet, dass** das Halteelement (202;402;502;602) an der Gartenschere durch eine distale, insbesondere lösbare Befestigung (204;404;504;604) auf der Seite des distalen Endes (106) des Körpers (102) der Gartenschere (200;300;400;500;600) befestigt ist.

6. Gartenschere (400;500) nach dem vorstehenden Anspruch,
**dadurch gekennzeichnet, dass** die distale Befestigung eine auf dem Halteelement (402;502) vorgesehene oder durch das Halteelement (402;502) gebildete und um das Schneidwerkzeug (104), insbesondere um die Basis des Schneidwerkzeugs (104), geführte Schlaufe (404;504) umfasst oder durch diese gebildet wird.

7. Gartenschere (200;300;400;500;600) nach einem der vorstehenden Ansprüche, **dadurch gekennzeichnet, dass** das Halteelement (202;402;502;602) an der Gartenschere (200;300;400;500;600) durch eine proximale, insbesondere lösbare Befestigung (206;406;506;606₁;606₂) an der Seite eines proximalen Endes (112) des Körpers (102), das dem distalen Ende (106) gegenüberliegt, befestigt ist.

8. Gartenschere (400) nach dem vorstehenden Anspruch,
**dadurch gekennzeichnet, dass** die proximale Befestigung eine Schlaufe (406) umfasst oder durch diese gebildet wird, die auf dem Halteelement (402) vorgesehen ist oder durch das Halteelement (402) gebildet wird und um einen elektrischen Stromversorgungsverbinder (110) der Gartenschere (400) an dem proximalen Ende (112) herum geführt wird.

9. Gartenschere (300) nach einem der vorstehenden Ansprüche, **dadurch gekennzeichnet, dass sie** mindestens einen Aufwickler (302) zum Aufwickeln des Halteelements (202) umfasst, wenn es nicht in Gebrauch ist.

10. Gartenschere (400) nach einem der vorstehenden Ansprüche,
**dadurch gekennzeichnet, dass** das Halteelement (402) derart neu positionierbar ist, dass es selektiv auf der einen oder der anderen Seite des Körpers (102) der Gartenschere (400) positioniert werden kann.

11. Gartenschere (200;300;600) nach einem der vorstehenden Ansprüche, **dadurch gekennzeichnet, dass** sie ein Mittel zur Einstellung der Spannung oder der Länge des Halteelements (202;602) umfasst.

12. Gartenschere nach einem der vorstehenden Ansprüche,
**dadurch gekennzeichnet, dass** sie zwei Halteelemente umfasst, die auf beiden Seiten des Körpers der Gartenschere positioniert sind.

## Claims

1. Electric shears (200;300;400;500;600) comprising:
- a longitudinal body (102), and
- a cutting tool (104) at one end (106), called distal end, of said body (102);
**characterized in that** it further comprises at least one holding member (202;402;502;602) of one hand (114) of a user holding the shears (200;300;400;500;600), the holding member being attached to the shears and designed to rest on the back of said hand (114) passed between said holding member (202;402;502;602) and of the body (102) of said shears, and tightening said hand (114) against said body (102) and holding said hand (114) against said body (102);
said holding member (202;402;502;602) being elastic.

2. The shears (200;300;400;500;600) according to the preceding claim, **characterized in that** the holding member (202;402;502;602) is configured to apply sufficient holding force to hold the shears (200;300;400;500;600) against the hand (114) when said hand (114) is applying no compressive force on the shears (200;300;400;500;600).

3. The shears (200;300;400;500;600) according to any one of the preceding claims, **characterized in that** the holding member (202;402;502;602) is in the form of a strap.

4. The shears (200;300;400;500;600) according to any one of the preceding claims, **characterized in that** the holding member (202;402;502;602) is arranged in a longitudinal direction of said shears (200;300;400;500;600).

5. The shears (200;300;400;500;600) according to any one of the preceding claims, **characterized in that** the holding member (202;402;502;602) is attached to the shears by an attachment (204;404;504;604), called distal, in particular removable, on the side of the distal end (106) of the body (102) of said shears (200;300;400;500;600).

6. The shears (400;500) according to the preceding claim, **characterized in that** the distal attachment comprises, or is achieved by, a loop (404;504) provided on the holding member (402;502), or formed by the holding member (402;502), and passed around the cutting tool (104), in particular the base of said cutting tool (104).

7. The shears (200;300;400;500;600) according to any one of the preceding claims, **characterized in that** the holding member (202;402;502;602) is attached to the shears (200;300;400;500;600) by an attachment (206;406;506;606₁, 606₂), called proximal, in particular removable, on the side of one end (112), called proximal, of the body (102), opposite to the distal end (106).

8. The shears (400) according to the preceding claim, **characterized in that** the proximal attachment comprises, or is achieved by, a loop (406), provided on the holding member (402) or formed by the holding member (402), and passed around an electrical power connector (110) of said shears (400) at the proximal end (112).

9. The shears (300) according to any one of the preceding claims, **characterized in that** it comprises at least one spool (302) for winding up the holding member (202) when it is not in use.

10. The shears (400) according to any one of the preceding claims, **characterized in that** the holding member (402) may be repositioned such that it can be positioned selectively on one side or the other of the body (102) of said shears (400).

11. The shears (200;300;600) according to any one of the preceding claims, **characterized in that it** comprises means for adjusting the tension, or the length, of the holding member (202;602).

12. The shears according to any one of the preceding claims, **characterized in that it** comprises two holding members positioned on either side of the body of said shears.
